(19) Europäisches Patentamt
European Patent Office
Office européen des brevets

(11) Publication number: **0 320 648**
**A2**

(12) **EUROPEAN PATENT APPLICATION**

(21) Application number: **88119318.9**

(22) Date of filing: **21.11.88**

(51) Int. Cl.[4]: **C08L 69/00 , //(C08L69/00, 67:02)**

(30) Priority: **16.12.87 US 133860**

(43) Date of publication of application: **21.06.89 Bulletin 89/25**

(84) Designated Contracting States: **DE FR GB IT NL**

(71) Applicant: **GENERAL ELECTRIC COMPANY**
**1 River Road**
**Schenectady New York 12305(US)**

(72) Inventor: **Boutni, Omar Mohamed**
**1232 Oriole Circle**
**Mt. Vernon Indiana 47620(US)**
Inventor: **Luce, John Benjamin**
**92 Park Ridge Drive**
**Mt. Vernon Indiana 47620(US)**

(74) Representative: **Catherine, Alain**
**General Electric France Service de Propriété Industrielle 18 Rue Horace Vernet B.P. 76**
**F-92134 Issy-les-Moulineaux Cédex(FR)**

(54) **Flame retardant-low heat distortion polycarbonates with low gloss.**

(57) Polycarbonate resin compositions include, for example, a proportion of polycyclohexane dimethylcyclohexanedicarboxylate polyester elastomer. The compositions are useful to thermoplastically mold articles having properties useful where flame retardancy, low heat distortion and low gloss are desired such as in housings for business machines.

EP 0 320 648 A2

# FLAME RETARDANT-LOW HEAT DISTORTION POLYCARBONATES WITH LOW GLOSS

## BACKGROUND OF THE INVENTION

### Field of the Invention

The invention relates to synthetic polymeric resin compositions useful for thermoplastic molding and more particularly relates to a moldable blend of aromatic polycarbonates and polyester elastomers.

## BRIEF DESCRIPTION OF THE PRIOR ART

Aromatic polycarbonate resins are a well known class of synthetic polymeric resins, generally prepared by the reaction of a polyhydric phenol with a carbonate precursor; see for example U.S. Patent 3,989,672. These resins, for the most part, are thermoplastic and readily molded under heat to fabricate a wide variety of articles such as automotive parts, tool housings and like structural components. The technique of molding and advantageous moldable compositions comprising the base polycarbonate in admixture with a wide variety of fillers, reinforcing agents, stabilizers, melt-viscosity modifiers, strength and impact modifiers, fire retardants, pigments and like additives are also well known. Representative of such moldable compositions are those described in the U.S. Patents 3,431,224 and 4,481,331.

In spite of the numerous thermoplastic polycarbonate molding resin compositions known and available, there has remained a need for thermoplastic polycarbonate resin compositions meeting specific needs and from which articles of specific physical properties may be molded. For example, there is a need for polycarbonate resins which may be molded into engineering structural components having certain thickness specifications, impact resistance and resistance to thermal degradation. These articles are of particular need as an alternative to polystyrene in the fabrication of cabinets and housings to enclose, for example, office machines such as personal computers. The resins of the present invention meet this need in the art.

## SUMMARY OF THE INVENTION

The invention comprises a thermoplastic molding composition, which comprises;

a thermoplastic, aromatic polycarbonate;

a polyester elastomer characterized in part by a durometer hardness of Shore D 50-60; an elongation at fracture of 300-400 percent; a tensile stress at 300 percent elongation of 20-25 MPa; a flexural modulus of 120-130 MPa; an Izod impact strength of notch at -30° C. of less than 900 J/m and a torsional modulus temperature of -30 to -45° C. at 240 MPa; and

a flame retarding proportion of a flame retarding agent.

The invention also comprises articles thermoplastically molded from the compositions of the invention, such as structural components of automobile vehicles and the like. The articles of the invention exhibit improved resistance to flammability in comparison to the system without the flame retarding agent and with respect to stress-crack resistance, over articles molded from polycarbonate alone and are particularly useful as machine housings.

## DETAILED DESCRIPTION OF THE PREFERRED EMBODIMENTS OF THE INVENTION

A wide variety of polycarbonate resins are known as are methods of their preparation, which are thermoplastically moldable. These polycarbonate resins may be prepared by the reaction of a polyhydric phenol with a carbonate precursor such as phosgene, a halo-formate or a carbonate ester. The method of preparation is described for example in U.S. Patents 4,001,184 and 4,474,999, both of which are herein

incorporated by reference.

In general, the polycarbonate resins are typified as possessing recurring structural units of the formula:

$$-\!\!\left( O-A-O-\overset{\overset{\displaystyle O}{\|}}{C} \right)\!\!-$$

wherein A is a divalent aromatic moiety of the polyhydric phenol employed in the polymerization reaction. The dihydric phenols which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are: 2,2-bis-(4- hydroxyphenyl)propane; hydroquinone; resorcinol; 2,2-bis-(4- hydroxyphenyl)pentane; 2,4′-(dihydroxyphenyl)methane; bis-(2-hydroxyphenyl)methane; bis-(4-hydroxyphenyl)methane; bis- (4-hydroxy-5-nitrophenyl)methane; 1,1-bis(4-hydroxyphenyl) ethane; 3,3-bis(4-hydroxyphenyl)pentane; 2,2-dihydroxydiphenyl; 2,6-dihydroxynaphthalene; bis-(4-hydroxydiphenyl) sulfone; bis-(3,5-diethyl-4-hydroxyphenyl)-sulfone; 2,2-bis- (3,5-dimethyl-4-hydroxyphenyl))propane; 2,4′-dihydroxydiphenyl sulfone; 5′-chloro-2,4′-dihydroxydiphenyl sulfone; bis-(4-hydroxyphenyl)diphenyl sulfone; 4,4′-dihydroxydiphenyl ether; 4,4′-dihydroxy-3,3′dichlorodiphenyl ether; 4,4′-dihydroxy-2,5-dimethyldiphenyl ether; and the like.

A variety of additional dihydric phenols which may be employed to provide such carbonate polymers are disclosed in U.S. Patent No. 2,999,835. It is, of course, possible to employ two or more different dihydric phenols or a dihydric phenol in combination with a glycol, a hydroxy terminated polyester, or a dibasic acid in the event that a carbonate copolymer rather than a homopolymer is desired for use in the preparation of the polycarbonate mixtures of the invention.

The carbonate precursor may be either a carbonyl halide, a diaryl carbonate or a bishaloformate. The carbonyl halides include carbonyl bromide, carbonyl chloride, and mixtures thereof. The bishaloformates suitable for use include the bishaloformates of dihydric phenols such as bischloroformates of 2,2-bis(4-hydroxyphenol)propane, 2,2-bis(4-hydroxy-3,5-dichlorophenol)propane, hydroquinone, and the like, or bishaloformates of glycols such as bishaloformates of ethylene glycol, and the like. While all of the above carbonate precursors are useful, carbonyl chloride, also known as phosgene, is preferred.

Also included within the scope of the present invention are the use of high molecular weight thermoplastic randomly branched polycarbonates. These randomly branched polycarbonates are prepared by coreacting a polyfunctional organic compound with the aforedescribed dihydric phenol and carbonate precursor. Representative of the polyfunctional organic compounds useful in making the branched polycarbonates are set forth in U.S. Patent Nos. 3,028,365; 3,334,154; 4,001,184; 4,131,575; all of which are hereby incorporated herein by reference thereto.

The polycarbonate resin components of the compositions of the invention are also represented by so-called "end-capped" polycarbonates. More specifically, it is known that in certain procedures of producing aromatic carbonate polymers from dihydric phenols and a carbonate precursor such as phosgene small amounts of certain molecular weight regulators or chain terminaters can be used to provide end or terminal groups of the carbonate polymer and thereby control the molecular weight of the polycarbonate.

A molecular weight regulator, i.e.; a chain stopper, is generally added to the reactants prior to or during the contacting of them with a carbonate precursor. Useful molecular weight regulators include, but are not limited to, monohydric phenols such as phenol, chroman-I, paratertiarybutylphenyl, p-cumylphenol and the like. Techniques for the control of molecular weight are well known in the art and may be used for controlling the molecular weight of the thermoplastic polycarbonate resins employed as components of the resins of the invention. The preferred aromatic carbonate polymer is a homopolymer derived from 2,2-bis(4-hydroxyphenyl)propane (bisphenol-A).

Preferably, the polycarbonate resin will have an intrinsic viscosity (as measured in methylene chloride at a temperature of 25°C) ranging from about 0.30 to about 1.40 deciliters/gram.

The polyester elastomer component of the compositions of the invention are preferably characterized by the following physical properties:

| Property | ASTM Method | Value |
|---|---|---|
| Specific Gravity | D 792 | 1.1 - 1.2 |
| Durometer Hardness, Shore D/A Scales | D 2240 | 50/90-60/100 |
| Tensile Fracture Strength at 50 cm/min. Crosshead Speed, (MPa) | D 412* | 20 - 30 |
| Elongation at Fracture, (%) | | 300 - 400 |
| Tensile Stress, MPa | | |
| @ 100% Elongation | | 14 - 16 |
| @ 200% Elongation | | 17 - 19 |
| @ 300% Elongation | | 20 - 23 |
| Tension Set After 100% Elongation, (%) | | 50 - 60 |
| Tension Set After Break, (%) | | 180 - 220 |
| Tensile Modulus, MPa at 5 mm/min Crosshead Speed | | 100 - 120 |
| Flexural Modulus, (MPa) | D 790 | 120 - 130 |
| Split Tear Strength, (N/mm) | D 1938 | 80 - 90 |
| Compression Set, Unannealed, (%) (Method B) | D 395 | |
| @ 23° C. | | 35 - 45 |
| @ 70° C. | | 65 - 75 |
| Izod Impact, J/m of notch | D 256 | |
| @ −30° C. | | less than 900 |
| Torsional Modulus Temperature, (° C.) | D 1043 | |
| @ 240 MPa | | -30 - -40 |
| @ 310 MPa | | -35 - -45 |
| @ 930 MPa | | -50 - -60 |
| Water Absorption, 24 h, (%) | D 570 | 0.2 - 0.6 |

* D 412, Die C specimens, which are equivalent to ASTM D 638, Type IV specimens 1.9 thick.

In addition, the polyester elastomers advantageously have thermal properties as follows:

| Property | ASTM Method | Value |
|---|---|---|
| Flow Rate at 230° C./2160 g., (g/10) | D 1238 | 4 - 20 |
| Crystalline Peak, Melting Point, Tm, (° C) | | 195 - 215 |
| Crystallization Temperature on Cooling Tcc, ° C | | 140 - 160 |
| Glass Transition, Tg, (° C) | | less than 10 |
| Specific Heat, (J/g/° K/° CB) | D 2766 | |
| 25° C - solid | | 1.5 - 1.9 |
| 200° C. - transition | | 3.0 - 3.3 |
| 225° C. - melt | | 3.1 - 3.4 |
| Heat of Fusion, (J/g) | E 793 | 12 - 15 |
| Vicat Softening Temperature, (° C) | D 1525 | 160 - 170 |
| Viscosity at 25° C. [measured in a solution of 60% phenol and 40% trichloroethane (w/w)] | | 1.05-1.23 |

Most preferably, the polyester elastomer will have optical properties when extruded into a film, as follows:

| Property | ASTM Method | Value |
|---|---|---|
| Haze (%) | D 1003 | 0.8 - 1.2 |
| Gloss at 45° (Gardner Rating) | D 2457 | 80 - 90 |
| Light Transmission, (%) | D 1003 | 85 - 95 |

A preferred polyester elastomer having the desired properties is polycyclohexane dimethylcyclohexanedicarboxylate elastomer, most preferably having an inherent viscosity of from 1.05 to 1.23 (determined by Eastman Test Method ECD-A-AC-G-V-I; Eastman Chemical Products, Inc., Kingsport, TN).

Generally, the polycarbonate resin comprises from 65 to 95 parts by weight of the compositions and the articles of the invention, preferably 75 to 90 parts, most preferably 85 to 90 parts. The polyester elastamer may comprise from 5 to 35 parts by weight of the compositions of the invention, preferably 5 to 15 parts.

The method of the invention may be carried out by a homogeneous blending of the polycarbonate with the polyester. The blending may be carried out by adding the two resins together and mixing the two components with conventional technique and apparatus. In general, the mixtures may be blended by premixing in conventional mixing rolls, dough mixers, Banbury mixers and the like and blending the pre-mix in an extruder or fluxing it on a mill at an elevated temperatures sufficient to achieve a homogeneous melt blending. Upon cooling, the blend may be pelletized and stored for use.

The compositions of the invention include a flame retarding proportion of a flame retarding agent. Some particularly useful flame retardants are the alkali and alkaline earth metal salts of sulfonic acids. These type of flame retardants are disclosed in U.S. Patent Nos. 3,775,367; 3,933,734; 3,931,100; 3,978,024; 3,948,851; 3,926,980; 3,919,167; 3,909,490; 3,953,396; 3,953,300; 3,917,559; 3,951,910 and 3,940,366, all of which are hereby incorporated by reference. A flame retarding proportion of the above described flame retarding additives may vary widely but is generally within the range of from 0.1 to 2 percent by weight of the total composition.

A preferred flame-retardant additive used in this invention is a copolycarbonate which is derived from a halogen-substituted dihydric phenol and a dihydric phenol, said halogen preferably being chlorine or bromine. Preferably, this copolycarbonate is the product of a halogenated bisphenol-A. Preferably, this copolycarbonate consists of 75 to 25 weight percent of the product of tetrabromobisphenol-A and, correspondingly, 25 to 75 weight percent of the product of bisphenol-A, based on the weight of the copolycarbonate. The preparation of this copolycarbonate is set forth in U.S. Pat. No. 3,334,154 which is incorporated herein by reference. A flame retarding proportion of the copolycarbonate prepared according to the U.S. Patent 3,334,154 is generally within the range of from about 3 to 20 percent by weight of the polycarbonate/polyester components of the compositions of the invention.

The compositions of the invention may advantageously also contain a fluorinated polyolefin drip retarding agent, i.e.; an agent which inhibits liquifying (dripping) of the composition when exposed to open flame. The fluorinated polyolefins used in this invention as drip retarding agents are commercially available or may be readily prepared by known processes. They are solids obtained by polymerization of tetrafluoroethylene, for example, in aqueous media with free radical catalysts, e.g., sodium, potassium or ammonium peroxydisulfides at 100 to 1,000 psi at temperatures of 0°-200°C., and preferably at 20°-100°C. The preparation of some of these fluorinated polyolefins is disclosed in U.S. Pat. No. 2,393,967, which is hereby incorporated herein by reference. While not essential, it is preferred to use these fluorinated polyolefin resins in the form of relatively large particles, e.g., of average particle size of from about 0.3 to about 0.7 mm, mostly about 0.5 mm. These are generally better than the usual polytetrafluoroethylene powders which have particles of from about 0.05 to about 0.5 millimicrons in diameter. It is especially preferred to use the relatively large particle size material because it tends to disperse readily in polymers and bond them together into fibrous material. Such preferred polytetrafluoroethylenes are designated by ASTM as Type 3, and are available commercially from the E.I. du Pont de Nemours & Company under the tradename TEFLON type 30.

The instant compositions may contain an amount of fluorinated polyolefin which when admixed with the polycarbonate is effective to enhance to flame retardancy of said compositions and to render said compositions non-dripping. Generally, this is a relatively minor amount and is generally in the range of from about 0.01 to about 1 weight percent, based on the amount of the polycarbonate resin present, and preferably from about 0.01 to about 0.5 weight percent.

In preferred compositions of the invention (preferred for molding both relatively thick and thin articles), a conventional and known impact modifier for a polycarbonate resin is added to the compositions of the invention in an impact-modifying proportion.

Representative of such known impact modifiers are selectively hydrogenated linear, sequential or radial teleblock copolymers of a vinyl aromatic compound (A) and $(A')_n$ and an olefinic elastomer (B) of the A-B-A'; A $(B\text{-}A\text{-}B)_nA$; A $(B\text{-}A)_nB$; or B $[(A\text{-}B_n)B]_4$ type wherein n is an integer of from 1 to 10, inclusive. These copolymers may be prepared by known methods; see the description given in the U.S. Patent 4,481,331. Commercially available copolymers include for example Kraton G®-1650 and Kraton G®-1651 from Shell Chemical Company. The Kraton G® has a significant quantity of the residual aliphatic unsaturation removed by selective hydrogenation.

Also commercially available are the Solprenes manufactured by Phillips Petroleum Company.

The radial teleblock copolymers of which the Solprenes are typical examples can be characterized as having at least three polymer branches with each branch of the radial block polymer comprising terminal non-elastomeric segments, e.g. (A) and (A') as defined hereinabove. The branches of the radial block polymer contain a terminal non-elastomeric segment attached to an elastomeric polymer segment, e.g., (B) as defined above. These are described in U.S. Patent No. 3,753,936 and in U.S. Patent No. 3,281,383, both of which are incorporated herein by reference, and they are selectively hydrogenated by procedures known per se. In any event, the term "selective hydrogenation" is used herein to contemplate polymers in which the elastomeric blocks (A) and (A') have been left unhydrogenated, i.e., aromatic.

Further examples of impact modifiers advantageously added to the compositions of the invention are the polyolefins and the acrylate copolymers, particularly the core shell polymers such as Rohm and Haas Acryloid KM330; see U.S. Patent No. 4,096,202.

Also useful as impact modifiers are alkenyl aromatic resins. The alkenyl aromatic resin is a polymer having at least a portion of its units derived from an alkenyl aromatic monomer such as styrene, alpha-methylstyrene, p-methylstyrene, tert-butyl styrene, bromo-styrene, chlorostyrene, dimethylstyrene, p-methyl-alpha-methylstyrene, p-chloro-alpha-methylstyrene, vinyl xylene, vinyl naphthalene and vinyl toluene.

Specific examples of alkenyl aromatic monomers include styrene, chlorostyrene, bromostyrene, alphamethylstyrene, vinyl xylene, vinyl naphthalene and p-methyl styrene.

The alkenyl aromatic resin may be modified with a rubber. The term "rubber" as used in this disclosure is meant to encompass both natural and synthetic forms, and to include polyurethane rubber, ethylene/vinyl acetate rubber, silicone rubber, polyether rubber, polypentenamer rubber and ethylene-propylene-diene rubber; diene rubbers, i.e., homopolymers of conjugated dienes having e.g., 4 to 8 carbon atoms, such as butadiene, isoprene, piperylene and chloroprene; and copolymers of dienes with each other or with styrene, acrylic acid, methacrylic acid, or derivatives thereof (e.g., acrylonitrile, methacrylonitrile, acrylic acid, methacrylic acid, butyl acrylate and methyl methacrylate), or isobutylene. Preferably, the rubber is selected from among butadiene, butadiene/styrene, butadiene/methyl methacrylate, butadiene/ butyl acrylate, ethylene/propylene/diene, polypentanamer and butadiene/acrylonitrile rubbers.

An example of a preferred impact modifier for use in the present invention is an EPDM rubber modified polystyrene resin. The term "EPDM" is used in the art to designate rubbery interpolymers of a mixture of monoolefins and a polyene. Preferred types for use in the practice of this invention comprise from about 10 to about 90 mole percent of ethylene, from about 10 to about 90 mole percent of an alpha olefin having 3 to 10 carbon atoms, and from 0.1 to about 10 mole percent of a non-conjugated cyclic or open-chain diene having from 4 to 20 carbon atoms. In the most preferred embodiments, the rubbery interpolymer is derived from ethylene, propylene and a diene selected from 1,4-ethylidene-hexadiene, dicyclopentadiene, and especially, 5-ethylidene-2-norbornene.

The alkenyl aromatic resin that is modified with a rubbery interpolymer may be prepared by dissolving the rubbery interpolymer in the alkenyl aromatic monomer and polymerizing the mixture in the presence of a free radical initiator until 90-100% by weight of the alkenyl aromatic monomer has reacted to form said modified alkenyl aromatic resin. These materials are commercially available, such as the product Taflite® 925-01 which is a suspension polymerized EPDM modified, high impact polystyrene that contains about 12% of benzene insoluble rubber and the average rubber particle size is about 8-10 microns. The EPDM component is an ethylene-propylene-ethylidene-norbornene terpolymer.

Rubber modified polystyrenes containing smaller rubber particles may also be used, such as those described in U.S. Patent No. 4,101,504 (EPDM rubber particles having a median diameter of less than about 2 microns).

The preferred modified alkenyl aromatic resins are those made with an EPDM rubbery interpolymer of ethylene, propylene and 5-ethylidene-2-norbornene and styrene. Preferred modified alkenyl aromatic resins will include from about 5 to about 20% by weight of rubber interpolymer.

Further examples of impact modifiers which may be added to the compositions of the invention are copolymers made from an olefin, e.g., ethylene, propylene, or the like, copolymerized with one or more of a comonomer comprising a $C_1$-$C_6$ alkyl acrylate, e.g., methyl acrylate, ethyl acrylate, hexyl acrylate and the

like; a $C_1$-$C_6$ alkyl methacrylate, e.g., methyl methacrylate, ethyl methacrylate, hexyl methacrylate, and the like; acrylic acid; or methacrylic acid. Especially preferred are the well known copolymers of ethylene with an alkyl ester of acrylic acid. These are disclosed in U.S. Patent No. 2,953,551. Generally, the acrylate or methacrylate portion of the copolymer can range from about 10 to about 30 weight percent. The olefin portion of the copolymer can range from about 70 to about 90 weight percent. The preferred copolymer is an ethylene-ethyl acrylate copolymer in which the weight ratio of the ethylene fraction to the ethyl acrylate fraction is about 4.5 to 1. Suitable olefin-acrylate copolymers, as defined above, can be prepared by methods well known to those skilled in the art or can be obtained commercially. For example, Union Carbide's Bakelite® DPD-6169 ethylene-ethyl acrylate copolymer is advantageous for use in the present invention.

Methods for the preparation of these polymers, both commercial and non-commercial, are abundantly described in the literature and known to those skilled in the art.

Most preferred as impact modifiers which may be added to the compositions of the invention are organopolysiloxane -polycarbonate block co-polymers, which are highly compatible with the major ingredients of the compositions of the invention. These block copolymers are generally well known resins as are methods of their preparation; see for example preparative descriptions given in the U.S. Patents 4,027,072, 4,123,588 and 4,569,970. Representative of the polysiloxane- polycarbonate copolymers advantageously employed in the compositions of the invention are those prepared by reacting (A) a halogen chain-stopped polydiorganosiloxane composed of from about 5 to 200 chemically combined diorganosiloxy units consisting essentially of diakylsiloxy units which are connected to each other by silicon-oxygen-silicon linkages wherein each of the silicon atoms has two organo radicals attached through a carbon-silicon bond, and (B) a dihydric phenol having the formula:-

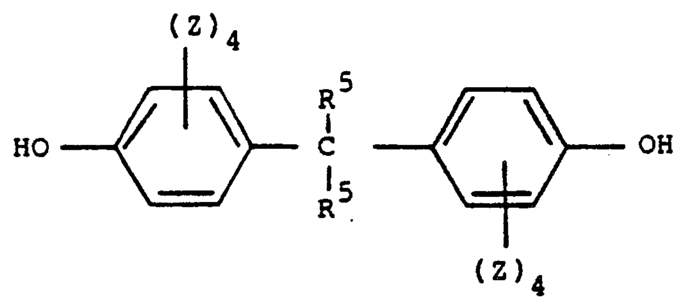

where Z is a member selected from the class consisting of hydrogen, lower alkyl radicals and halogen radicals and combinations thereof, and $R^5$ is a member selected from the class consisting of hydrogen, hydrocarbyl and halogenated hydrocarbyl radicals; and phosgenating the purified reaction product until the resulting copolymer achieves a maximum intrinsic viscosity.

The term "halogen" as used herein is embracive of chlorine, bromine, iodine and fluorine.

The term "hydrocarbyl" as used herein means the monovalent moiety obtained upon removal of a hydrogen atom from a parent hydrocarbon. Representative of hydrocarbyl are alkyl of 1 to 20 carbon atoms, inclusive, such as methyl,ethyl, propyl, butyl, pentyl, hexyl, heptye, octyl, nonyl, undecyl, decyl, dodecyl, tridecyl, tetradecyl, pentadecyl, hexadecyl, heptadecyl, octadecyl, nonodecyl, eicosyl, and isomeric forms thereof; cycloalkyl of 3 to 8 carbon atoms, inclusive, such as cyclopropyl, cyclobutyl, cyclopentyl, cyclohexyl, cycloheptyl, cyclooctyl and the like; alkenyl of 2 to 20 carbon atoms, inclusive, such as vinyl, allyl, butenyl, pentenyl, hexenyl, octenyl, nonenyl, decenyl, undececyl, dodecenyl, tridecenyl, pentadecenyl, octadecenyl, and isomeric forms thereof; aryl such as phenyl, naphthyl and the like; aralkyl of 7 to 20 carbon atoms such as phenmethyl, phenethyl, phenpentyl, phendecyl, phennonodecyl and isomeric forms thereof.

The term "lower alkyl" is used throughout the specification and claims to mean alkyl as previously defined, having 1 to 4 carbon atoms.

An impact-modifying proportion of the known impact modifiers described above is generally within the range of from about 0.05 to 15 parts by weight of the composition, preferably from 3-10 parts, most preferably 4 to 8 parts.

The thermoplastic molding resin compositions of the instant invention may also optionally contain various commonly known and used additives such as, for example, antioxidants; antistatic agents; inert fillers such as glass, talc, mica, and clay; ultraviolet radiation absorbers such as the benzophenones, benzotriazoles, and the like; hydrolytic stabilizers such as the epoxides disclosed in U.S. Patent Nos.

3,489,716, 4,138,379 and 3,839,247, all of which are incorporated herein by reference; color stabilizers such as the organophosphites; thermal stabilizers such as a phosphite; and mold release agents.

The resin compositions of the invention may be thermoplastically molded using conventional techniques and apparatus; for example by compression, injection, calendaring, extrusion and like techniques.

The following examples describe the manner and process of making and using the invention and set forth the best mode contemplated by the inventor for carrying out the invention but are not to be construed as limiting the scope of the invention. All parts are by weight unless otherwise stated. Test results are in accordance with the following test methods.

Intrinsic Viscosity:

The intrinsic viscosity of polycarbonate resins was measured at a temperature of 25 °C in methylene chloride and is reported in deciliters/ gram (dl/g).

Deflection Temperature Under Load (DTUL):

ASTM test method D-648-56 at a load of 18.6 Kg/cm$^2$.

Notched Izod Impact Strength

ASTM test method D-256; all specimens were 100% ductile at failure, unless otherwise noted.

Tensile Strength and Elongation

ASTM test method D-638.

Flexural Modulus

ASTM test method D-790.

Weld Line Strength

ASTM test method D-256.

Gloss

ASTM test method D-1003 at 60°.

Flammability (UL-94)

The resin is injection molded at about 600 °C. into test bars of about 12.7 cm. by 1.27 cm. by 3.175 mm. in thickness. These test bars are subjected to the test procedure set forth in underwriters' Laboratories, Inc. Bulletin UL-94, Burning Test for Classified Materials. In accordance with this test procedure, materials that pass are rated V-0, V-I or V-II based on the results of 5 specimens. The criteria for each V (for vertical) rating per UL-94 is briefly as follows:

"V-0": Average flaming and/or glowing after removal of the igniting flame shall not exceed 5 seconds and none of the specimens shall drip flaming particles which ignite absorbant cotton.

"V-I": Average flaming and/or glowing after removal of igniting flame shall not exceed 25 seconds and the glowing does not travel vertically for more than 1/8" of the specimen after flaming ceases and glowing is incapable of igniting absorbent cotton.

"V-II": Average flaming and/or glowing after removal the igniting flame shall not exceed 25 seconds and the specimens drip flaming particles which ignite absorbent cotton.

In addition, a test bar which continues to burn for more than 25 seconds after removal of the igniting flame is classified, not by UL-94, but by standards of the invention, as "burns". Further, UL-94 requires that all test bars in each test group must meet the V-type rating to achieve the particular classification. Otherwise, the 5 test bars receive the rating of the worst single bar. For example, if one bar is classified as V-II and the other four are classified as V-0, then the rating for all 5 bars is V-II.

## EXAMPLES 1-4

A polycarbonate (PC) prepared by the reaction of phosgene and bisphenol-A and having an intrinsic viscosity of from about 0.46 to about 0.49 deciliters/gram (dl/g) (LEXAN® resin 125; General Electric Co., Mount Vernon, IN.) was provided. Aliquots of the resin provided were blended with proportions of a thermoplastic polyester elastomer (ECDEL 9966; Eastman Plastics, Kingsport, TN.; inherent viscosity of 1.16 dl/g) characterized in part by the following representative physical properties:

| Property, Units | ASTM Method | Value |
|---|---|---|
| Specific Gravity | D 792 | 1.13 |
| Durometer Hardness, Shore D/A Scales | D 2240 | 55/95 |
| Tensile Fracture Strength at 50 cm/min. Crosshead Speed, (MPa) | D 412* | 24 |
| Elongation at Fracture, (%) | | 380 |
| Tensile Stress, (MPa) | | |
| @ 100% Elongation | | 14.8 |
| @ 200% Elongation | | 17.9 |
| @ 300% Elongation | | 21.7 |
| Tension Set After 100% Elongation, (%) | | 55 |
| Tension Set After Break, (%) | | 200 |
| Tensile Modulus, MPa at 5 mm/min Crosshead Speed | | 110 |
| Flexural Modulus, (MPa) | D 790 | 124 |
| Split Tear Strength, (N/mm) | D 1938 | 85 |
| Compression Set, Unannealed, (%) (Method B) | D 395 | |
| @ 23° C. | | 40 |
| @ 70° C. | | 70 |
| Izod Impact, (J/m of notch) | D 256 | |
| @ -30° C. | | less than 854 |
| @ -40° C. | | less than 854 |
| Torsional Modulus Temperature,(° C.) | D 1043 | |
| @ 240 MPa | | -37 |
| @ 310 MPa | | -40 |
| @ 930 MPa | | -57 |
| Water Absorption, 24 h, (%) | D 570 | 0.4 |

* D 412, Die C specimens, which are equivalent to ASTM D 638, Type IV specimens were 1.9 mm (.075 in.) thick.

| Property | ASTM Method | Value |
|---|---|---|
| Flow Rate at 230° C./2160 g., (g/10) | D 1238 | 10 |
| Crystalline Peak, Melting Point, Tm, (° C) | | 195 - 215 |
| Crystallization Temperature on Cooling Tcc, (° C) | | 150 |
| Glass Transition, Tg, (° C) | | less than 0 |
| Specific Heat, (J/g/° K/° CB) | D 2766 | |
| 25° C - solid | | 1.7 |
| 100° C - solid | | 1.9 |
| 150° C - solid | | 2.2 |
| 175° C - solid | | 2.6 |
| 200° C. - transition | | 3.1 |
| 225° C. - melt | | 3.2 |
| Heat of Fusion, (J/g) | E 793 | 13 |
| Thermal Conductivity, (W/m° K) | C 177 | |
| 0° - 50° C. | | 0.25 |
| 50° C - 200° C | | 0.21 |
| Coefficient of Thermal Expansion, mm/mm/° C | D 696 | 15 X $10^{-5}$ |
| Brittleness Temperature, (° C) | D 746 | less than -70 |
| Vicat Softening Temperature, (° C) | D 1525 | 165 |
| Film Optical Properties: | | |
| Haze (%) | D 1003 | 1.0 |
| Gloss at 45° (Gardner Rating) | D 2457 | 85 |
| Light Transmission, (%) | D 1003 | 90 |

The mixtures were uniformly blended together in a laboratory tumbler with or without added impact modifiers and/or fire retardants and the blend extruded at 246° C. The extrudate was pelletized and the pellets were fed to an injection molding machine which molded test bars at 271° C. The moldings were subjected to tests to determine their physical properties. The blend components and the test results are set forth below in the TABLE 1.

EXAMPLES 5 (control)

For purposes of comparison a commercially available polycarbonate (LEXAN® 125, General Electric Co., supra.) was also tested. The test results for comparison are also shown in the Table I.

TABLE 1

| COMPOSITIONS | EXAMPLES 1 | 2 | 3 | 4 | 5 (control) |
|---|---|---|---|---|---|
| Lexan® 125 (%) | 85 | 85 | 90 | 87 | 100 |
| ECDEL 9966 (%) | 5 | 5 | 5 | 5 | — |
| Tetrabromo-BPA (%)[1] | 10 | 10 | — | 8 | — |
| STB (phr)[2] | 0.3 | 0.3 | 0.3 | 0.3 | — |
| LR resin (phr)[3] | 5 | — | 5 | 5 | — |
| Blendex 301 (phr)[4] | — | 5 | — | — | — |
| BC-58 (FR-25) (%)[5] | — | — | 5 | — | — |
| Drip inhibitor (phr)[6] | 0.6 | 0.6 | 0.6 | 0.6 | — |
| PROPERTIES | | | | | |
| Tensile Yield (MPa) | 62.7 | 62.0 | 63.4 | 62.7 | 62 |
| Tensile Break (MPa) | 61.4 | 60.0 | 58.6 | 64.1 | 65 |
| Tensile Elongation (%) | 74.5 | 72.5 | 64.9 | 79.2 | 100 |
| Flexural Yield (MPa) | 94.5 | 93.8 | 95.1 | 93.8 | 93 |
| Flexural Modulus ($MPa \times 10^3$) | 2.3 | 2.6 | 2.1 | 2.3 | 2.3 |
| DTUL °C @ 1.82 MPa | 119.6 | 115.5 | 118.6 | 120.9 | 127 |
| 3.175mm N. Izod (J/M) | 160 | 197 | 165 | 176 | 640 |
| 3.75mm N. Izod (J/M) aged at 125°C, 24 hours | 101 | 144 | 106 | 112 | 106 |
| 6.35mm N. Izod (J/M) | 128 | 133 | 128 | 138 | 106 |
| Weld Line Strength (J) | 6.5 | 33.9 | 6.1 | 7.3 | 52 |
| Gloss, 60° | 92 | 57 | 92 | 92 | more than 100 |
| Flammability Rating UL94 | | | | | |
| 1.60mm | VI | V2 | V2 | V2 | V2 |
| 3.175mm | VO | VO | VO | VO | V2 |

1. Tetra-bromobisphenol-A.

2. Sodium salt of trichlorobenzenesulfonate.

3. LR-3320, dimethylpolysiloxane-polycarbonate block copolymer; General Electric Company, Mt. Vernon, IN.

4. Acrylonitrile - butadiene - styrene copolymer, (weight ration 24/34 (42).

5. Tetrabromobisphenol-A carbonate oligomer, Great Lakes Chemical Corp., W. Lafayette, In. 47906.

6. Teflon® type 30, E.I. du Pont de Nemours and Co.

## Claims

1. The invention comprises a thermoplastic molding composition, which comprises;
a thermoplastic, aromatic polycarbonate;
a polyester elastomer characterized in part by a durometer hardness of Shore D 50-60; an elongation at fracture of 300-400 percent; a tensile stress at 300 percent elongation of 20-25 MPa; a flexural modulus of 120-130 MPa; an Izod impact strength of notch at -30° C. of less than 900 J/m and a torsional modulus temperature of -30 to -45° C. at 240 MPa; and
a flame retarding proportion of a flame retarding agent.

2. The composition of claim 1 wherein the elastoner is a polycyclohexane dimethylcyclohexanedicarboxylic acid.

3. The composition of claim 1 wherein the polycarbonate comprises from 65 to 95 percent by weight of the composition.

4. The composition of claim 1 which further comprises a drip-retarding proportion of a drip retardant.

5. The composition of claim 1 which further comprises an impact modifying proportion of an impact-modifier.

6. An article thermoplastically molded from a composition of claim 1.